(19) Europäisches Patentamt

European Patent Office

Office européen des brevets

(11) Veröffentlichungsnummer: **0 008 011**
**B1**

## (12) EUROPÄISCHE PATENTSCHRIFT

(45) Veröffentlichungstag der Patentschrift:
**14.10.81**

(21) Anmeldenummer: **79102415.1**

(22) Anmeldetag: **12.07.79**

(51) Int. Cl.³: **G 03 B 27/52**, G 03 G 15/04,
G 02 B 13/24, G 03 B 5/00

(54) Vorrichtung zum Verstellen der Lage eines Objektivs in zwei Richtungen.

(30) Priorität: **04.08.78 DE 2834334**

(43) Veröffentlichungstag der Anmeldung:
**20.02.80 Patentblatt 80/4**

(45) Bekanntmachung des Hinweises auf die Patenterteilung:
**14.10.81 Patentblatt 81/41**

(84) Benannte Vertragsstaaten:
**AT BE CH FR GB IT NL**

(56) Entgegenhaltungen:
**CH-A-415 279**
**DE-A1-2 738 301**
**DE-B2-2 328 463**
**US-A-3 829 209**
**US-A-4 013 361**

(73) Patentinhaber: **SIEMENS AKTIENGESELLSCHAFT Berlin
und München, Postfach 22 02 61, D-8000 München 22 (DE)**

(72) Erfinder: **Zoeke, Siegfried, Balanstrasse 77,
D-8000 München 90 (DE)**

## Vorrichtung zum Verstellen der Lage eines Objektivs in zwei Richtungen

Die Erfindung bezieht sich auf eine Vorrichtung zum Verstellen der Lage eines Objektivs in zwei Richtungen, insbesondere zum Verstellen des Objektivs in der Formulardruckeinrichtung eines nichtmechanischen Druckgerätes, bei welcher das Objektiv am einen Ende einer Stange befestigt ist, die verschiebbar und drehbar in einer ortsfesten Führung gelagert ist.

Das Verstellen der Lage eines Objektivs in zwei Richtungen ist z. B. in der Formulardruckeinrichtung eines nichtmechanischen Druckers erforderlich. Eine solche Formulardruckeinrichtung ist z. B. folgendermaßen aufgebaut: Auf einer transparenten Walze wird ein Negativ des zu druckenden Formulars angeordnet. Im Inneren der transparenten Walze ist eine Lichtquelle angeordnet, durch die das Negativ des Formulars beleuchtet wird. Das von dem Negativ ausgehende Licht wird über ein Objektiv der Oberfläche einer Fotoleitertrommel zugeleitet. Dort werden vorher aufgeladene Bereiche der Fotoleitertrommel entsprechend der Intensität des einfallenden Lichtes wieder entladen. Die Ladungsbilder werden dann auf übliche Weise entwickelt, die dadurch entstehenden Tonerbilder auf Papier umgedruckt und schließlich fixiert.

Bei dem Druckgerät kann zusätzlich zu der Formulardruckeinrichtung ein Zeichengenerator verwendet werden, mit dessen Hilfe Ladungsbilder von zu druckenden Zeichen auf der Oberfläche der Fotoleitertrommel erzeugt werden. Ein solcher Zeichengenerator kann z. B. aus einem Laser, einer akustooptischen Ablenkzelle und einem Polygonspiegel bestehen. Die von diesem Zeichengenerator auf der Fotoleitertrommel erzeugten Ladungsbilder werden auf die vorher beschriebene Art und Weise weiterbehandelt. Um nun die auf Papier zu druckenden Formulare in richtiger Weise auf dem Papier anzuordnen und auch die richtige Zuordnung zu den von den Zeichengeneratoren erzeugten Zeichen zu erhalten, ist es erforderlich, das durch die Formulardruckeinrichtung erzeugte Bild des Formulares in Zeilen- und Spaltenrichtung verstellbar zu machen. Dazu kann auf einfache Weise das im Strahlengang der Formulardruckeinrichtung angeordnete Objektiv verwendet werden.

Aus der CH-A-415 279 ist eine Vorrichtung zum Verstellen der Lage eines Objektivs in zwei Richtungen bekannt. Das Objektiv ist am einen Ende einer Stange befestigt, die verschiebbar und drehbar in einer fest angeordneten Stangenführung gelagert ist und am anderen Ende einen Verstellgriff aufweist.

Aus der DE-A1-2 738 301 ist eine weitere Vorrichtung zur Verstellung eines Objektivs in zwei Richtungen bekannt. Hier ist das Objektiv in einem ersten Schlitten angeordnet, der in einem zweiten Schlitten gelagert ist. Der erste Schlitten kann mit Hilfe eines Einstellmechanismus in der einen Richtung verstellt werden, der zweite Schlitten kann zusammen mit dem ersten Schlitten mittels eines Stellhebels in der anderen Richtung eingestellt werden.

Die der Erfindung zugrunde liegende Aufgabe besteht darin, eine Vorrichtung anzugeben, durch die die Lage eines Objektivs in zwei Richtungen verstellt werden kann, wobei die Verstellung in den zwei Richtungen im Millimeterbereich erfolgen kann und die Vorrichtung einfach aufgebaut ist. Diese Aufgabe wird dadurch gelöst, daß die ortsfeste Führung ein in einer Platine eines Gehäuses angeordnetes Rohr ist, daß am anderen Ende der Stange ein Hebel vermittels einer Achse drehbar befestigt ist, dessen einer Hebelarm sich auf einer an der Platine fest angeordneten Rolle abstützt und dessen anderer Hebelarm auf einer Exzenterrolle aufliegt, welche die Drehung der Stange bewirkt sowie mit einem Einstellmechanismus verbunden ist, der zur Verschiebung der Stange den Hebel um die abstützende Rolle schwenkt.

Um den Hebel bzw. die Stange ohne die Einwirkung der Einrichtung auf einer bestimmten Position zu halten, ist es zweckmäßig, zwischen dem Rohr und dem Hebel auf der Stange eine Druckfeder anzuordnen. Mit Hilfe der Druckfeder kann sowohl in axialer Richtung der Stange als auch in Drehrichtung eine Federkraft ausgeübt werden.

Die Erzeugung der Drehbewegung der Stange kann auf einfache Weise dadurch erreicht werden, daß eine drehbare Welle vorgesehen ist, auf der die Exzenterrolle angeordnet ist. Die Federkraft der Druckfeder wirkt dabei in Richtung auf die Exzenterrolle. Wird die Welle und damit die Exzenterrolle gedreht, dann führt der Hebel und damit die Stange eine Drehbewegung aus.

Die Bewegung des Hebels zum Verstellen der Stange in axialer Richtung bzw. Drehrichtung kann mit Hilfe von Seilen erzeugt werden, wobei das Seil für die axiale Bewegung am Ende des anderen Hebelarms und das Seil für die Drehbewegung an der Welle mit der Exzenterrolle angreift. Zweckmäßigerweise sind die anderen Enden der Seile jeweils mit einem Einstellhebel verbunden. Durch Bewegen der Einstellhebel kann dann die Bewegung in axialer bzw. Drehrichtung der Stange veranlaßt werden.

Um einen kompakten Aufbau der Einstellhebel zueinander zu erreichen, ist es zweckmäßig, den ersten Einstellhebel auf einer Hohlachse anzuordnen, auf dessen anderem Ende eine Rolle liegt, zu dem das erste Seil führt und in der Hohlachse eine weitere Achse zu lagern, an dessen einen Ende der zweite Einstellhebel und an dessen anderem Ende eine zweite Rolle für das zweite Seil angeordnet ist. Damit ist es möglich, die Einstellhebel unmittelbar benachbart zueinander anzuordnen. Bei einer derartigen Anordnung bietet sich zusätzlich die Möglichkeit, die Einstellhebel als Zeiger einer Skala zu verwenden.

Die Vorteile der erfindungsgemäßen Vorrichtung bestehen darin, daß das Objektiv in Zeilen- und Spaltenrichtung im Millimeterbereich verstellt werden kann. Die Bedienelemente für das Objektiv können dabei in günstiger Beobachtungsposition angeordnet werden. Die Einstellung des Objektivs ist jederzeit reduzierbar. Schließlich ist die Vorrichtung sehr einfach ausgeführt.

Anhand eines Ausführungsbeispiels, das in den Figuren dargestellt ist, wird die Erfindung weiter erläutert. Es zeigt

Fig. 1 eine perspektivische Ansicht der Vorrichtung,

Fig. 2 eine Draufsicht auf die Vorrichtung,

Fig. 3 eine Vorderansicht der Vorrichtung,

Fig. 4 der Aufbau des Einstellmechanismus,

Fig. 5 die Verwendung der Einstellhebel als Zeiger einer Skala.

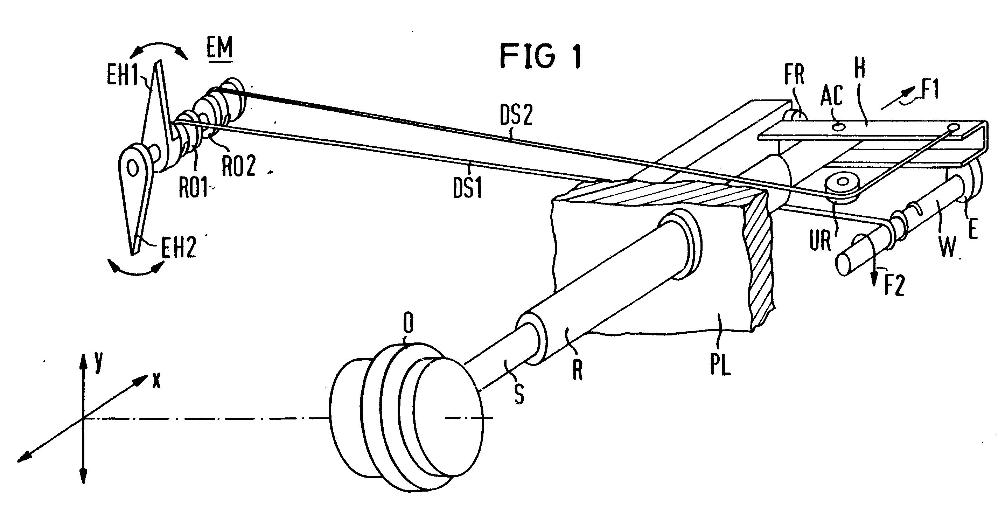

Wie Fig. 1 zeigt, soll die Lage eines Objektivs O, z. B. eines Spiegelobjektivs, in zwei Richtungen verstellbar sein.

Das Objektiv O ist dazu an einer Stange S befestigt. Diese Stange S ist in einem Rohr verschiebbar und drehbar gelagert. Das Rohr R ist an einer Platine PL eines Gehäuses, z. B. der Formulardruckeinrichtung, befestigt. Das Rohr R führt durch die Platine PL hindurch, an seinem anderen Ende ist ein Hebel H drehbar angeordnet. Die Drehachse AC des Hebels H führt dabei durch die Stange S hindurch.

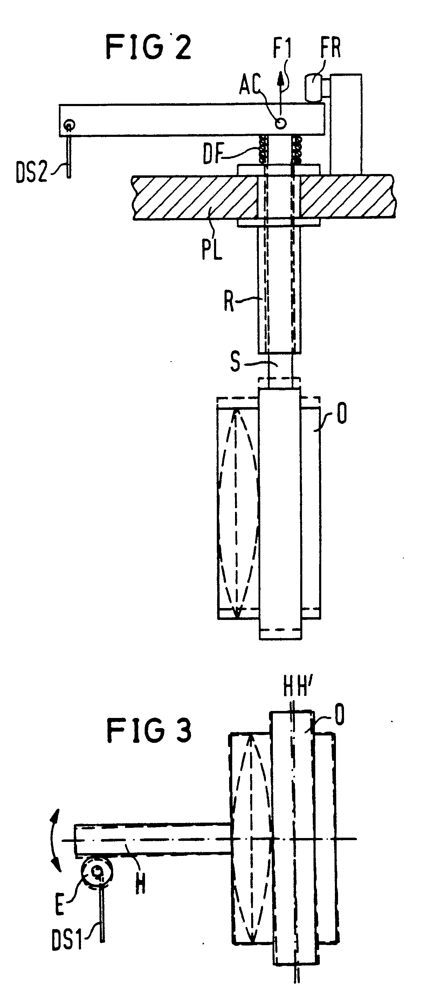

Das eine Ende des Hebels H liegt an einer Abstützung an, die im Ausführungsbeispiel als feste Rolle FR ausgebildet ist. Das andere Ende des Hebels liegt auf einer Exzenterrolle E auf, die an einer Welle W befestigt ist (Fig. 3). Am anderen Ende des Hebels H greift zusätzlich ein Seil DS2, z. B. ein Drahtseil an, das zu einem Einstellmechanismus EM führt. Um die Welle W ist ein weiteres Seil DS1 gewickelt, das ebenfalls zu dem Einstellmechanismus EM führt. Richtungsänderungen der Seile, z. B. des Seiles DS2, werden mit Hilfe von Umlenkrollen UR ausgeführt.

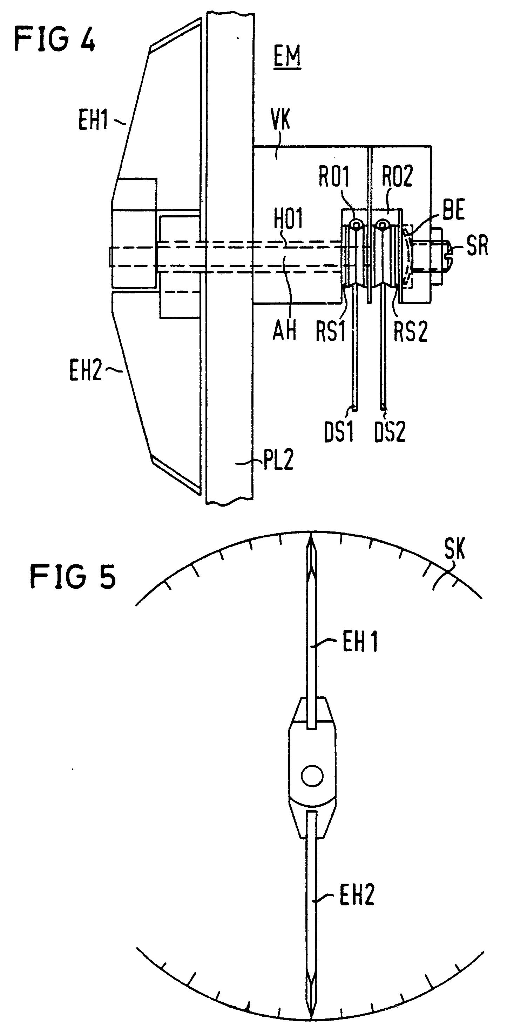

Der Einstellmechanismus EM, dessen genauer Aufbau der Fig. 4 entnommen werden kann, enthält für das erste Seil DS1 eine erste Rolle RO1, für das zweite Seil DS2 eine zweite Rolle RO2, auf denen die Seile aufwickelbar sind. Die Rolle RO1 bzw. RO2 sind jeweils mit Einstellhebel EH1 bzw. EH2 verbunden.

Um der Einstellung des Hebels H bzw. der Stange S mit Hilfe der Seile DS2 und DS1 entgegenzuwirken, ist eine Druckfeder DF (Fig. 2) vorgesehen, die zwischen dem Rohr R und dem Hebel H auf der Stange S angeordnet ist. Mit Hilfe dieser Druckfeder DF kann sowohl eine Federkraft in Richtung des Pfeiles F1 wie in Richtung des Pfeiles F2 ausgeübt werden.

Fig. 2 zeigt einen Ausschnitt aus der Vorrichtung der Fig. 1. Es ist wiederum das Objektiv O zu sehen, das auf der Stange S befestigt ist. Die Stange S führt durch das Rohr R, das an der Platine PL befestigt ist. Es ist zu sehen, daß die Stange S zu dem Hebel H führt, der um die Achse AC bewegbar ist. Weiterhin kann die Lage der Druckfeder DF erkannt werden. Das eine Ende des Hebels H stützt sich an einer Rolle FR ab, die an der Platine PL fest angeordnet ist.

Der genauere Aufbau des Einstellmechanismus EM kann Fig. 4 entnommen werden. Der erste Einstellhebel EH1 ist auf einer Hohlachse HO1 befestigt, auf deren anderen Ende die Rolle RO1 angeordnet ist. Auf der Rolle RS1 wird das Seil DS1 aufgewickelt. In der Hohlachse HO1 ist drehbar eine weitere Achse AH2 angeordnet, auf deren einen Ende der Einstellhebel EH sitzt, während auf ihrem anderen Ende der Rolle RO2 für das Seil DS2 befestigt ist. Die Hohlachse HO1 ist dabei in einer Platine PL2 gelagert. Um die Rollen RO1 und RO2 in jeder beliebigen Lage zu halten, sind Reibfederscheiben RS1 und RS2 vorgesehen. Die Reibfederscheibe RS1 liegt dabei zwischen einer Verkleidung VK und der Rolle RO1, die Reibfederscheibe RS2 zwischen der Verkleidung VK und der Rolle RO2. Um die erforderlichen Reibungskräfte zu erzeugen, kann durch eine Schraube SR eine gebogene Scheibe BE gegen die Reibfederscheibe RS2 gedrückt werden.

Bei einer derart kompakten und benachbarten Anordnung der Einstellhebel EH1 und EH2 ist es möglich, diese als Zeiger einer Skala SK zu verwenden. Diese Ausführungsform ist in Fig. 5 gezeigt. Dadurch ist es möglich, die Stellung des Objektivs O an der Stellung der Einstellhebel EH1 und EH2 auf der Skala zu erkennen. Die Einstellung des Objektivs ist damit jederzeit wieder reproduzierbar.

Im folgenden soll die Funktion der Vorrichtung erläutert werden: Soll das Objektiv O in der einen Richtung verstellt werden, dann wird der Einstellhebel EH1 in entsprechender Weise gedreht. Damit wird über das Seil DS1 die Welle W und damit der Exzenter E gedreht. Da der Hebel H unter der Federkraft DF steht und an dem Exzenter E anliegt, führt der Hebel H ebenfalls eine Bewegung aus, durch die die Stange S gedreht wird. Die Drehung der Stange S wirkt sich auf das Objektiv O so aus, daß die Abbildung in Y-Richtung verschoben wird. Um eine verzerrungsfreie Abbildung zu erreichen ist es notwendig, das Objektiv O um seine Hauptebenen HH' zu drehen.

Zur Bewegung des Objektivs O in X-Richtung wird der Einstellhebel EH2 gedreht. Damit wird das Seil DS2 verkürzt und der Hebel H um die Achse AC unter Abstützung an der Rolle FR bewegt. Die Stange S wird dabei in axialer Richtung durch das Rohr R geschoben.

Bewegungen des Objektivs O in Gegenrichtung erfolgt ebenfalls durch Drehen der Einstellhebel EH1 und EH2 in Gegenrichtung, wobei die Kraft zum Verändern der Lage der Stange S durch die Druckfeder DF erzeugt wird.

## Liste der Bezugszeichen

| | |
|---|---|
| O | Objektiv |
| S | Stange |
| R | Rohr |
| PL | Platine |
| H | Hebel |
| AC | Achse |
| W | Welle |
| E | Exzenterrolle |
| F1 | Federkraft |
| F2 | Federkraft |
| DE | Druckfeder |
| FR | Rolle |
| UR | Umlenkrolle |
| DS1, DS2 | Seile |
| RO1 | Rolle |
| RO2 | Rolle |
| EM | Einstellmechanismus |
| EH1 | Einstellhebel |
| HO1 | Hohlachse |
| AH | Achse |
| RS1, RS2 | Reibfederscheibe |
| PL2 | Platine |
| VK | Verkleidung |
| SR | Schraube |
| BE | Scheibe |
| SK | Skala |
| X, Y | Einstellrichtungen in der Bildebene |
| HH' | Hauptebenen |

## Patentansprüche

1. Vorrichtung zum Verstellen der Lage eines Objektivs in zwei Richtungen, insbesondere zum Verstellen eines Objektivs in der Formulardruckeinrichtung eines nichtmechanischen Druckgerätes, bei welcher das Objektiv (O) am einen Ende einer Stange (S) befestigt ist, die verschiebbar und drehbar in einer ortsfesten Führung gelagert ist, dadurch gekennzeichnet, daß die ortsfeste Führung ein in einer Platine (PL) eines Gehäuses angeordnetes Rohr (R) ist, daß am anderen Ende der Stange (S) ein Hebel (H) vermittels einer Achse (AC) drehbar befestigt ist, dessen einer Hebelarm sich auf einer an der Platine (PL) fest angeordneten Rolle (FR) abstützt und dessen anderer Hebelarm auf einer Exzenterrolle (E) aufliegt, welche die Drehung der Stange (S) bewirkt sowie mit einem Einstellmechanismus verbunden ist, der zur Verschiebung der Stange (S) den Hebel um die abstützende Rolle (FR) schwenkt.

2. Vorrichtung nach Anspruch 1, dadurch gekennzeichnet, daß zwischen dem Rohr (RO) und dem Hebel (H) eine Druckfeder (DF) angeordnet ist.

3. Vorrichtung nach einem der vorhergehenden Ansprüche, dadurch gekennzeichnet, daß eine drehbare Welle (W) vorgesehen ist, auf der die Exzenterrolle (E) angeordnet ist.

4. Vorrichtung nach Anspruch 3, dadurch gekennzeichnet, daß an der Welle (W) ein Seil (DS1) angeordnet ist das zu einer ersten mit einem ersten Einstellhebel (EH1) verbundenen Rolle (RO1) führt.

5. Vorrichtung nach einem der vorhergehenden Ansprüche, dadurch gekennzeichnet, daß an dem Ende des anderen Hebelarms (H) ein zweites Seil (DS2) befestigt ist, das zu einer zweiten mit einem zweiten Einstellhebel (EH2) verbundenen Rolle (RO2) führt.

6. Vorrichtung nach Anspruch 5, dadurch gekennzeichnet, daß die erste Rolle (RO1) am einen Ende einer Hohlachse (HO1) angeordnet ist, an deren anderen Ende der erste Einstellhebel (EH1) liegt, und daß die zweite Rolle (RO2) am einen Ende einer Achse (AH) befestigt ist, die in der Hohlachse (HO1) angeordnet ist und an deren Ende der zweite Einstellhebel (EH2) liegt.

7. Vorrichtung nach Anspruch 6, dadurch gekennzeichnet, daß die Einstellhebel als Zeiger einer Skala (SK) ausgebildet sind.

8. Vorrichtung nach einem der vorhergehenden Ansprüche, dadurch gekennzeichnet, daß die Drehung des Objekts (O) um seine Hauptebene (HH') erfolgt.

## Claims

1. Apparatus for adjusting the position of an objective in two directions, in particular for adjusting an objective in the blank printing arrangement of a non-mechanical printer, in which the objective (O) is fixed at one end of a rod (S) which is displaceably and rotatably supported in a stationary guide, characterised in that the stationary guide is formed by a tube (R) which is arranged in a plate bar (PL) of a housing, that a lever (H) is pivoted to the other end of the rod (S) by means of a pivot pin (AC), one arm of said lever being supported on a roller (FR) which is fixed to the plate bar (PL), and the other arm of said lever resting on a cam (E) which causes rotation of the rod (S), and which is connected to an adjusting mechanism which, in order to displace the rod (S), swivels the lever about the supporting roller (FR).

2. Apparatus as claimed in Claim 1, characterised in that between the tube (R) and the lever (H) there is arranged a compression spring (DF).

3. Apparatus as claimed in one of the preceding Claims, characterised in that there is provided a rotatable shaft (W) on which the cam (E) is arranged.

4. Apparatus as claimed in Claim 3, characterised in that on the shaft (W), there is arranged a cord (DS1) which leads to a first roller (RO1) which is connected to a first adjusting lever (EH1).

5. Apparatus as claimed in one of the preceding Claims, characterised in that at the end of the other lever arm (H) a second cord (DS2) is fixed, which leads to a second roller (RO2) connected to a second adjusting lever (EH2).

6. Apparatus as claimed in Claim 5, characterised in that the first roller (RO1) is arranged at

one end of a hollow shaft (HO1) at the other end of which the first adjusting lever (EH1) is arranged, and that the second roller (RO2) is fixed at one end of a shaft (AH) which is arranged in the hollow shaft (HO1) and at the end of which the second adjusting lever (FH2) is located.

7. Apparatus as claimed in Claim 6, characterised in that the adjusting levers are designed as pointers on a dial (SK).

8. Apparatus as claimed in one of the preceding Claims, characterised in that the rotation of the objective (O) occurs abaout its main plane (HH').

**Revendications**

1. Installation de réglage de la position d'un objectif suivant deux directions, notamment de réglage d'un objectif d'un dispositif d'impression de formulaires d'une imprimante non mécanique, dans laquelle l'objectif (O) est fixé à l'extrémité d'une tige (S) montée coulissante et tournante dans une glissière fixe, caractérisée en ce que la glissiere fixe est un tube (R) monté sur une platine (PL) d'un bâti, un levier (H) est monté à rotation à l'aide d'un axe (AC) à l'autre extrémité de la tige (S) et l'un de ses bras s'appuie sur un galet (FR) monté fixé sur la platine (PL), tandis que l'autre de ses bras repose sur un galet (E) excentrique, qui provoque la rotation de la tige (S) et qui est relié à un mécanisme de réglage faisant pivoter le levier autour du galet (FR) d'appui pour faire coulisser la tige (S).

2. Installation suivant la revendication 1, caractérisée en ce qu'un ressort (DF) de pression est interposé entre le tube (R) et le levier (H).

3. Installation suivant l'une des revendications précédentes, caractérisée en ce qu'il est prévu un arbre (W) tournant sur lequel est monté le galet (E) excentrique.

4. Installation suivant la revendication 3, caractérisée en ce que sur l'arbre (W) est disposé un câble (DS1) qui mène à un premier galet (RO1) relié à un premier levier (EH1) de réglage.

5. Installation suivant l'une des revendications précédentes, caractérisée en ce qu'à l'extrémité de l'autre bras de levier (H) est fixé un second câble (DS2) qui arrive à un second galet (RO2) relié à un second levier (EH2) de réglage.

6. Installation suivant la revendication 5, caractérisée en ce que le premier galet (RO1) est disposé à l'une des extrémités d'un axe (HO1) creux, à l'autre extrémité duquel se trouve le premier levier (EH1) de réglage et le second galet (RO2) est solidaire d'une extrémité d'un axe (AH), qui est disposé dans l'axe (HO1) creux et à l'autre extrémité duquel se trouve le second levier (EH2) de réglage.

7. Installation suivant la revendication 6, caractérisée en ce que les leviers de réglage sont agencés en aiguilles d'une échelle graduée (SK).

8. Installation suivant l'une des revendications précédentes, caractérisée en ce que la rotation de l'objectif (O) s'effectue autour de son plan (HH') principal.

FIG 1

# FIG 2

# FIG 3

FIG 4

EM

EH1

VK

RO1  RO2

BE

HO1

SR

AH  RS1  RS2

EH2

DS1  DS2

PL2

FIG 5

SK

EH 1

EH2

11